# EUROPÄISCHE PATENTSCHRIFT

(11) **EP 0 407 755 B1**
(45) Veröffentlichungstag und Bekanntmachung des Hinweises auf die Patenterteilung: **06.04.1994**
(21) Anmeldenummer: 90111274.8
(22) Anmeldetag: 15.06.1990
(51) Int. Cl.: D06F 37/20, F16F 7/08

(54) **Reibungsdämpfer, insbesondere für Trommelwaschmaschine**
Frictional damper, particularly for washing machine
Amortisseur à friction, notamment pour machine à laver à tambour

(30) Priorität: 10.07.1989 DE 3922630; 09.06.1990 DE 4018599
(43) Veröffentlichungstag der Anmeldung: 16.01.1991
(73) Patentinhaber: Miele & Cie. GmbH & Co., D-33325 Gütersloh (DE)
(72) Erfinder: Hanschmidt, Herbert, D-4830 Gütersloh 1 (DE); Beier, Christian, D-4830 Gütersloh (DE)

(56) Entgegenhaltungen:
- DE-A- 1 680 642
- DE-A- 2 158 382
- DE-A- 3 725 100
- DE-U- 8 508 931

## Beschreibung

Die Erfindung betrifft einen Reibungsdämpfer gemäß Oberbegriff des Anspruchs 1.

Reibungsdämpfer werden zur Schwingungsdämpfung in Trommelwaschmaschinen eingesetzt, um einen ruhigen und erschütterungsfreien Lauf der Trommelwaschmaschine zu gewährleisten. Ein Nachteil herkömmlicher Reibungsdämpfer besteht darin, daß diese über ihren gesamten Arbeitsbereich eine annähernd konstante Dämpfungswirkung aufweisen.
Die Wäschetrommeln von Trommelwaschmaschinen sind bekanntlich mit verschiedenen Drehzahlen antreibbar, die im Bereich von sogenannten unter- und überkritischen sowie kritischen Drehzahlen liegen. Es ist wünschenswert, im Bereich der kritischen Drehzahl eine möglichst hohe und im Bereich der unter- bzw. überkritischen Drehzahlen eine geringere Dämpfungswirkung des Reibungsdämpfers zu realisieren.

Aus der DE-OS 37 25 100 ist zur Erfüllung dieser Erfordernisse ein Reibungsdämpfer bekannt, bei dem in einem zylindrischen Gehäuse ein weiteres Gehäuse gelagert ist, auf dessen Umfang ein Reibbelag angeordnet ist. In dieses weitere Gehäuse ragt die Kolbenstange, an deren Ende sich ein Reibungskolben mit Reibbelag befindet. Die Reibkraft zwischen Reibbelag am Reibungskolben und der Gehäusewand des inneren Gehäuses ist kleiner als die Reibkraft zwischen dem auf dem Außendurchmesser des inneren Gehäuses angeordneten Reibbelag und der Gehäuseinnenwand.

Durch diese Anordnung soll eine amplitudenabhängige Dämpfungswirkung erreicht werden.

Ein wesentlicher Nachteil der vorbeschriebenen Ausführung liegt in dem erhöhten konstruktiven Aufwand für den Aufbau dieser Reibungsdämpfer.

Ein Nachteil weiterer bekannter Reibungsdämpfer liegt in dem sprunghaften Kraftverlauf über der Aus- und Eindrückbewegung.

Der Erfindung liegt daher die Aufgabe zugrunde, einen Reibungsdämpfer zur amplitudenabhängigen Schwingungsdämpfung mit einem möglichst einfachen Aufbau zu gestalten.

Diese Aufgabe wird erfindungsgemäß durch die Merkmale des Anspruchs 1 gelöst. Vorteilhafte Ausgestaltungen und Weiterbildungen ergeben sich aus den nachfolgenden Ansprüchen.

Die mit der Erfindung erzielbaren Vorteile liegen insbesondere darin, daß bei der erfindungsgemäßen Ausführung ein weicher Übergang beim Richtungswechsel erreicht wird, wodurch das System geräuscharm arbeitet.

In einer vorteilhaften Weiterbildung der Erfindung sind am Reibungsdämpfer Mittel zur präzisen Einstellung der Dämpfkraft vorgesehen. Eine genau justierte Dämpfkraft ist insbesondere im Hinblick auf die Erhöhung der Schleuderdrehzahlen von Vorteil.

Durch die Anordnung von Ventilplatten am Dämpferfuß und auf der Kolbenstange sowie von Kühlluftschlitzen am Reibungskolben erfolgt eine Zwangsbelüftung des Reibungsdämpfers. Dadurch wird die entstehende Reibungswärme von den Reibbelägen abgeführt.

Um die spezielle Flächenpressung an den Reibbelägen möglichst gering zu halten, werden statt einer Dämpfungs anordnung ein oder mehrere gewählt.

Um die spezifische Flächenpressung an den Reibbelägen möglichst gering zu halten, werden statt einer Dämpfungsanordnung ein oder mehrere gewählt.

Im Betrieb kann es unter Einwirkung von Querkräften auf die Kolbenstange zu einem Verkanten bzw. Anschlagen der Kolbenstange im oberen Gehäusebereich und damit zu erhöhter Geräuschbildung kommen.

Dieses Problem tritt insbesondere auf, wenn nur eine Dämpfungsanordnung vorgegeben ist. Der Einsatz von zwei Dämpfungsanordnungen kann diese Nachteile schon teilweise vermeiden. Eine weitere mögliche Verbesserung des Reibungsdämpfers liegt darin, die Anschläge auf der Kolbenstange "auseinanderzuziehen" und in einem Abstand "X" zueinander anzuordnen. Eine derartige Anordnung der Dämpfungsanordnungen auf der Kolbenstange bewirkt eine verbesserte Aufnahme der Querkräfte, so daß ein Anschlagen der Kolbenstange am Gehäuse und damit erhöhte Geräuschbildung vermieden wird.

Ein Ausführungsbeispiel der Erfindung ist in der Zeichnung dargestellt und wird im folgenden näher beschrieben. Es zeigen
- Figur 1 den Aufbau eines Reibungsdämpfers in der Seitenansicht im Schnitt,
- Figur 2 einen Reibungsdämpfer (Variante 1) mit Kühlluftführungssystem in der Seitenansicht im Schnitt,
- Figur 3 ausschnittsweise eine Dämpfungsanordnung gemäß Figur 1 (Variante 2),
- Figur 4 ausschnittsweise eine Dämpfungsanordnung gemäß Figur 1 (Variante 1).

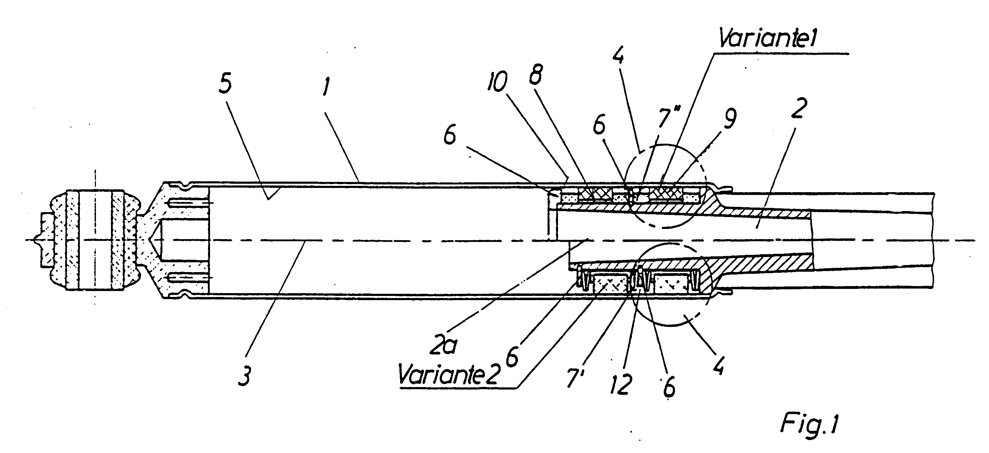

In der Figur 1 sind zwei mögliche Ausführungen der Mittel zur amplitudenabhängigen Schwingungsdämpfung des Reibungsdämpfers in einem Schnitt dargestellt. Das Gehäuse des Reibungsdämpfers ist mit (1) bezeichnet. Die in dem Gehäuse (1) bewegliche Kolbenstange (2) ist koaxial zur Gehäuselängsachse (3) angeordnet und vorzugsweise aus Kunststoff gefertigt. An ihrem im Gehäuse (1) befindlichen Ende trägt die Kolbenstange (2) auf dem Reibungskolben (2a) eine oder mehrere Dämpfungsanordnungen (4), welche im Reibschluß mit der Gehäuseinnenwand (5) stehen. Eine Dämpfungsanordnung (4) wird durch die auf dem Reibungskolben (2a) angeordneten Anschläge (6), Federelemente (7) und Abstandshülsen (8) mit dem Reibbelag (9) gebildet.

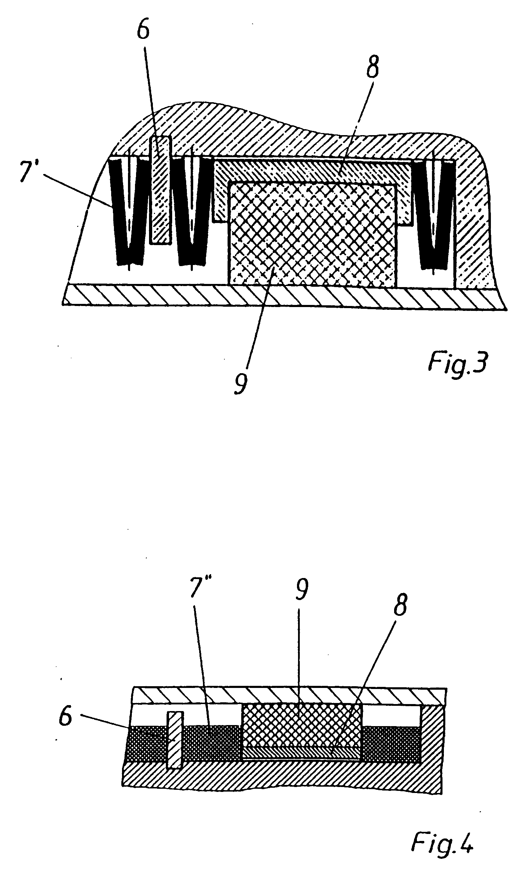

Je nach Anzahl der gewünschten Dämpfungsanordnungen (4) sind auf dem Reibungskolben (2a) mindestens zwei oder eine beliebige Zahl Anschläge (6) angeordnet. An den gegenüberliegenden Anschlagseiten (10) der Anschläge (6) sind die Federelemente (7) auf dem Reibungskolben (2a) angeordnet. Als Federelemente (7) kommen rein elastische Elemente, z. B. Tellerfedern (7′) gemäß Variante 2, s. auch Figur 4, oder elastische Ringe mit Eigendämpfung, z. B. PU-Ringe (7˝), gemäß Variante 1, s. auch Figur 5, zum Einsatz. Die Federelemente (7) einer Dämpfungsanordnung (4) können unterschiedlich in Länge und Einstellung ausgebildet sein, um eine verzögerte Mitnahme der einzelnen Reibbeläge zu erreichen. Durch die verzögerte Mitnahme wird ein weicher Übergang beim Richtungswechsel erreicht, wodurch das gesamte System geräuscharm arbeitet. In einem Zwischenraum von zwei Anschlägen (6) sind jeweils zwei oder mehrere Federelemente (7) vorgesehen, an denen sich eine oder mehrere Abstandshülsen (8), die mit Spiel auf dem Reibungskolben (2a) angeordnet sind, mit ihren Stirnflächen abstützen. Die Abstandshülsen (8) tragen Reibbeläge (9), die im Reibschluß mit der Gehäuseinnenwand (5) stehen.

Während des Waschbetriebes unterliegt das Aggregat der Trommelwaschmaschine, bestehend aus Laugenbehälter, Wäschetrommel, Antriebsmotor etc., Schwingungen, die mittels Schwingungsdämpfer gedämpft werden. Bei Trommelwaschmaschinen kommt es im unter- bzw. überkritischen Drehzahlbereich der Wäschetrommel zu geringen Auslenkungen des Aggregats. Bedingt durch diese Auslenkungen bewegt sich die Kolbenstange (2) nur über geringe Wegstrecken in axialer Richtung im Gehäuse (1). Die Reibkraft zwischen Reibbelag (9) und Gehäuseinnenwand (5) ist so groß, daß bei diesen geringen Amplituden nur eine Relativbewegung zwischen Kolbenstange (2) bzw. Reibungskolben (2a) und Abstandshülse (8) mit dem Reibbelag (9) erfolgt, die Abstandshülse (8) und der Reibbelag (9) aber nicht mit in axialer Richtung bewegt werden. Die Dämpfungswirkung wird nur dadurch erreicht, daß die Federelemente (7) durch die Hin- und Herbewegung der Kolbenstange (2) bzw. des Reibungskolbens (2a) zwischen den Anschlagseiten (10) der Federelemente (7) und den Stirnflächen der Abstandshülsen (8) elastisch verformt werden. Erst bei größeren Auslenkungen des Aggregats werden die Abstandshülsen (8) mit den Reibbelägen (9) in axialer Richtung mit bewegt. Dabei werden in einem ersten Teilstück des Hubweges zunächst die Federelemente (7) elastisch verformt. Im weiteren Verlauf des Hubweges wird die Abstandshülse (8) mit dem Reibbelag (9) mitgenommen und die Reibkraft zwischen Reibbelag (9) und Gehäuseinnenwand (5) überwunden, wobei eine erhöhte Dämpfungswirkung durch die Reibung zwischen Reibbelag (9) und Gehäuseinnenwand (5) erreicht wird. Durch die beweglich auf dem Reibungskolben (2a) angeordneten Abstandshülsen (8) mit den Reibbelägen (9) sowie die Federelemente (7) auf den Anschlagseiten (10) der Anschläge (6) wird ein besonders weicher Übergang beim Richtungswechsel in der Hubbewegung erzielt.
Um den Geräuschpegel möglichst gering zu halten, ist im Gehäuse (1) auf der Kolbenstange (2) z. B. ein nicht dargestellter Filzring vorgesehen.

Die Hohlräume (12) zwischen den einzelnen Elementen können zur Aufnahme von Schmierfett dienen. Zusätzlich dienen die Reibbeläge (9) selbst zur Aufnahme von Schmierstoffen. Die Schmierstoffe können in den Poren bzw. in Bohrungen des Reibbelags gelagert sein. Ein Luftaustausch erfolgt durch Bohrungen in der Kolbenstange (2).

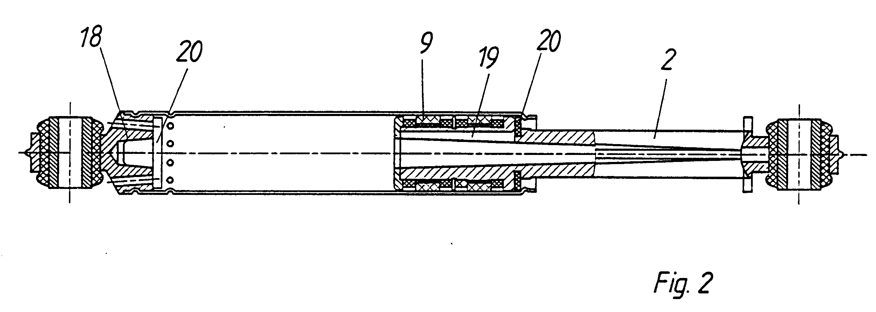

In der Figur 2 ist eine vorteilhafte Weiterbildung der Erfindung gezeigt.
Der Reibungskolben (2a) ist wie in Figur 2 mit Schlitzen (19) ausgebildet. Durch diese Schlitze (19) wird während des Betriebes Luft zugeführt. Die Luft wird längs durch den Reibungsdämpfer unmittelbar hinter dem Reibbelag durch die als Strömungskanäle ausgebildeten Schlitze (19) transportiert, so daß die entstehende Wärme vom Reibbelag abgeführt wird. Damit der Luftstrom längs durch den Reibungsdämpfer geführt wird, ist die Anbringung von Ventilplatten (20) erforderlich. Die Ventilplatten (20) öffnen und schließen die Luftführungen entsprechend der Hubbewegung des Kolbens (2).

## Patentansprüche

1. Reibungsdämpfer, insbesondere für Trommelwaschmaschinen mit Schleudergang, mit einem zylindrischen Gehäuse, mit einer koaxial zur Gehäuselängsachse angeordneten und aus dem Gehäuse herausgeführten, beweglichen Kolbenstange, die an ihrem im Gehäuse befindlichen Ende einen Reibungskolben mit Reibbelägen trägt, wobei Mittel vorgesehen sind, die eine amplitudenabhängige Dämpfung bewirken,
dadurch gekennzeichnet,
daß auf dem Reibungskolben (2a) als Mittel zur amplitudenabhängigen Dämpfung Anschläge (6) angeordnet sind, denen ein oder mehrere Federelemente (7) zugeordnet sind, wobei im Zwischenraum der Federelemente (7) mindestens eine Abstandshülse (8) auf dem Reibungskolben (2a) angeordnet ist, die einen Reibbelag (9) trägt, der im Reibschluß mit der Gehäuseinnenwand (5) steht, wobei die Reibkraft zwischen Gehäuseinnenwand (5) und Reibbelag (9) so groß ist, daß bei geringen Amplituden nur eine Relativbewegung zwischen Reibungskolben (2a) und Abstandshülse (8) stattfindet und eine geringe Dämpfungswirkung dadurch entsteht, daß die Federelemente (7) durch die Bewegung der Kolbenstange (2) bzw. des Reibungskolbens (2a) zwischen Anschlag (6) und Abstandshülse (8) einfedern und daß erst bei größeren Amplituden eine Mitnahme der Abstandshülse (8) mit dem Reibbelag (9) erfolgt, so daß die Dämpfungswirkung steigt.

2. Reibungsdämpfer nach Anspruch 1,
dadurch gekennzeichnet,
daß auf dem Reibungskolben (2a) mindestens zwei oder eine beliebige Anzahl Anschläge (6) angeordnet sind.

3. Reibungsdämpfer nach Anspruch 1 und 2,
dadurch gekennzeichnet,
daß die Abstandshülse (8) auf dem Reibungskolben (2a) mit ihren Stirnflächen an den Federelementen (7) abgestützt angeordnet ist.

4. Reibungsdämpfer nach einem der Ansprüche 1 bis 3,
dadurch gekennzeichnet,
daß die Dämpfungselemente (7) jeweils auf den Anschlagseiten (10) der Dämpfungsanschläge (6) angeordnet sind.

5. Reibungsdämpfer nach einem der Ansprüche 1 bis 4,
dadurch gekennzeichnet,
daß die Abstandshülse (8) mit Spiel auf dem Reibungskolben (2a) angeordnet ist.

6. Reibungsdämpfer nach einem der Ansprüche 1 bis 5,
dadurch gekennzeichnet,
daß der Reibungsdämpfer mit Mitteln zur Kühlluftführung ausgebildet ist.

7. Reibungsdämpfer nach Anspruch 6,
dadurch gekennzeichnet,
daß die Schlitze (19) am Reibungsdämpfer (2a) als Kühlluftführungsschlitze vorgesehen sind.

8. Reibungsdämpfer nach Anspruch 6 und 7,
dadurch gekennzeichnet,
daß der Dämpferfuß (18) und die Kolbenstange (2) mit Ventilplatten (20) ausgebildet sind.

## Claims

1. Friction shock absorbers, particularly for horizontal-axis washing machines with a spin cycle, with a cylindrical casing, and,
a reciprocating piston rod which leads from the casing and is fitted coaxially to the longitudinal axis of the casing and which bears a friction piston with friction lining at the end positioned within the casing, whereby measures have been incorporated which have an amplitude-related damping effect, whereby buffers (6) with one or more spring elements (7) are fitted on the friction piston (2a), whereby at least one spacer bush (8) is fitted to the friction piston (2a) in the spaces between the spring elements (7). This spacer bush should bear a friction lining (9) whose friction surface mates with the inner wall of the casing (5), whereby the friction between the inner wall of the casing (5) and the friction lining (9) is so great that, at low amplitudes, only relative motion takes place between the friction piston (2a) and the spacer bush (8) and a slight damping effect is achieved by the fact that the motion of the piston rod (2) within the friction piston (2a) is damped by the spring elements (7) between the buffer (6) and the spacer bush (8) and that the spacer bush (8) is only moved along together with the friction lining (9) at higher amplitudes, so that the damping effect is increased.

2. Friction shock absorbers in accordance with claim 1, whereby at least two or more buffers (6) are fitted to the friction piston (2a).

3. Friction shock absorbers in accordance with claims 1 and 2, whereby the spacer bush (8) is fitted to the friction piston (2a) with its ends face resting on the spring elements (7).

4. Friction shock absorbers in accordance with one of the claims 1 to 3, whereby the damping elements (7) are each fitted to the damping faces (10) of the buffers (6).

5. Friction shock absorbers in accordance with one of the claims 1 to 4. whereby the spacer bush (8) has clearance with respect to the fricton piston (2a).

6. Friction shock absorbers in accordance with one of the claims 1 to 5, whereby the friction shock absorber contains measures to allow the passage of cooling air.

7. Friction shock absorbers in accordance with claim 6, whereby the slots (19) on the friction piston (2a) have been designed to permit the passage of cooling air.

8. Friction shock absorbers in accordance with claims 6 and 7, whereby the damper base (18) and the piston rod (2) are fitted with valve reeds (20).

## Revendications

1. Amortisseur à friction, notamment pour lave-linge à tambour avec un programme d'essorage, comportant un corps cylindrique, une tige de piston mobile disposée coaxialement par rapport à l'axe longitudinal du corps et sortant du corps, qui porte à son extrémité située dans le corps un piston de friction muni de garnitures de friction, sachant que sont prévus des moyens qui provoquent un amortissement en fonction de l'amplitude, caractérisé en ce que sur le piston de friction (2a) sont disposées des butées (6) pour amortir en fonction de l'amplitude auxquelles sont associés un ou plusieurs éléments de ressort (7), sachant que dans l'intervalle entre les éléments de ressort (7), sur le piston de friction (2a), est disposé au moins un écarteur (8) portant une garniture de friction (9) qui frotte contre la paroi intérieure (5) du corps, sachant que la force de frottement entre la paroi intérieure (5) du corps et la garniture de friction (9) est tellement grande que, dans le cas de ces faibles amplitudes, il ne se produit qu'un mouvement relatif entre le piston de friction (2a) et l'écarteur (8) qui ne génère qu'un faible effet amortissant, en ce que les éléments de ressort (7) se compriment entre la butée (6) et l'écarteur (8) du fait du mouvement de la tige de piston (2) ou du piston de friction (2a), et en ce qu'il se produit un entraînement de l'écarteur (8) avec la garniture de friction (9) seulement en cas de fortes amplitudes, si bien que l'effet amortissant augmente.

2. Amortisseur à friction selon la revendication 1, caractérisé en ce qu'au moins deux ou un nombre quelconque de butées (6) sont disposées sur le piston de friction (2a).

3. Amortisseur à friction selon la revendication 1 et 2, caractérisé en ce que l'écarteur (8) est disposée sur le piston de friction (2a) en prenant appui avec ses surfaces frontales sur les éléments de ressort (7).

4. Amortisseur à friction selon l'une des revendications 1 à 3, caractérisé en ce que les éléments amortissants (7) sont chaque fois disposés sur les côtés d'arrêt (10) des butées amortissantes (6).

5. Amortisseur à friction selon l'une des revendications 1 à 4, caractérisé en ce que l'écarteur (8) est disposé sur le piston de friction (2a) avec un jeu.

6. Amortisseur à friction selon l'une des revendications 1 à 5, caractérisé en ce que l'amortisseur à friction est réalisé avec des moyens pour guider l'air de refroidissement.

7. Amortisseur à friction selon la revendication 6, caractérisé en ce que les fentes (19) sur l'amortisseur à friction (2a) sont prévues en tant que fentes pour le guidage pour l'air de refroidissement.

8. Amortisseur à friction selon la revendication 6 et 7, caractérisé en ce que le fond (18) de l'amortisseur et la tige de piston (2) sont réalisés munis de plaques de soupapes (20).
